# EUROPÄISCHE PATENTSCHRIFT

(11) **EP 1 152 655 B1**
(45) Veröffentlichungstag und Bekanntmachung des Hinweises auf die Patenterteilung: **21.04.2004**
(21) Anmeldenummer: 00912449.6
(22) Anmeldetag: 04.02.2000
(51) Int. Cl.: A01J 5/007

(54) **VORRICHTUNG UND VERFAHREN ZUM MESSEN VON UNTERDRUCKSCHWANKUNGEN IN EINER MELKANLAGE**
DEVICE AND METHOD FOR MEASURING VARIATIONS OF VACUUM IN A MILKING MACHINE
PROCEDE ET DISPOSITIF DE MESURE DE VARIATIONS D'UN VIDE DANS UN SYSTEME A TRAIRE

(30) Priorität: 04.02.1999 DE 19904500; 23.02.1999 DE 19907651
(43) Veröffentlichungstag der Anmeldung: 14.11.2001
(73) Patentinhaber: Ahrweiler, Christian, 21379 Echem (DE); Schütte, Eckhard, 21389 Echem (DE)
(72) Erfinder: Ahrweiler, Christian, 21379 Echem (DE); Schütte, Eckhard, 21389 Echem (DE)
(74) Vertreter: Schulz, Björn
(86) Internationale Anmeldenummer: PCT/EP2000/000881
(87) Internationale Veröffentlichungsnummer: WO 2000/045630

(56) Entgegenhaltungen:
- WO-A-96/36212
- US-A- 5 809 932

## Beschreibung

Die Erfindung betrifft eine Vorrichtung und ein Verfahren zum Messen von Unterdruckschwankungen in einer Melkanlage, insbesondere zum Melken von Kühen, wobei über einen Drucksensor der Unterdruck an einer Meßstelle der Melkanlage gemessen wird.

Es ist bekannt, in Melkanlagen einen Unterdruck zu erzeugen, um die Milch aus dem zu melkenden Tier in eine Milchleitung einströmen zu lassen und durch die Milchleitung einem Sammelgefäß zuzuführen. Bei Melkanlagen zum Melken von Kühen beträgt der Unterdruck typischerweise 40 kPa. Die einzelnen Zitzen werden üblicherweise zyklisch wiederkehrend alle 1000 Millisekunden mit dem Unterdruck beaufschlagt, und zwar jeweils etwa 600 Millisekunden lang.

Ein ständiger Unterdruck herrscht unterhalb der Zitzenspitze, um das Melkzeug an der Zitzenspitze zu halten. Das Zitzengummi hat die Aufgabe, den Blut- und Gewebestau in der Zitze, erzeugt durch den Unterdruck im Stauraum, zurückzudrücken. In der Öifnungsphase des Zitzengummis strömt Milch durch die Zitzenöffnung in die Milchleitung, falls Milch im Euter vorhanden ist. In der geschlossenen Phase des Zitzengummis tritt keine Milch aus dem Euter aus.

Der Schließ- bzw. Öffnungsstand der Zitzengummi ist wiederum abhängig von dem Luftdruck in einem Steuerhohlraum, der die Zitzengummis umgibt. Herrscht daher Unterdruck in dem Steuerhohlraum, wird das Zitzengummi geöffnet bzw. in offener Stellung gehalten. Herrscht dagegen kein oder annähernd kein Unterdruck in dem Steuerhohlraum, werden die Zitzengummis geschlossen bzw. bleiben in geschlossener Stellung. Im Fall des obigen Beispiels mit Pulszyklen von 1000 Millisekunden herrscht also etwa 600 Millisekunden lang Unterdruck in dem Steuerhohlraum, gefolgt von einer 400 Millisekunden langen Phase, in der kein bzw. nur ein geringer Unterdruck in dem Steuerhohlraum herrscht.

Unterdruckschwankungen im Milchflussbereich einer Melkanlage beim Melken können aus unterschiedlichen Gründen nachteilig sein. Allerdings sind bestimmte Unterdruckschwankungen notwendig, um die Pumpzyklen beim Betrieb der Melkanlage zu erreichen. Es muß daher genau nach Art und Ursache der Unterdruckschwankungen unterschieden werden. Nachteilig sind Unterdruckschwankungen insbesondere dann, wenn es zu einer Umkehr des Milchstroms im Bereich der Zitzen kommt, da dann unter Umständen durch das Umspülen der Zitzenhaut Krankheitskeime in die Milch gelangen. Weiterhin kann es zu Verletzungen oder Infektionen der Zitzen oder sogar des Euter kommen.

Aus den genannten Gründen spielen Unterdruckschwankungen bei der Leistungsbeurteilung von Melkanlagen eine große Rolle. Dies schlägt sich auch in den einschlägigen Normen für Landmaschinen-Melkanlagen nieder, etwa in der DIN/ISO 5707.

Um die korrekte Bewegung der Zitzengummis bzw. die korrekte zeitliche Steuerung des Zitzengummis zu kontrollieren, sind Unterdruckmessgeräte auf dem Markt erhältlich. Die bekannten Unterdruckmessgeräte verfügen über die Möglichkeit, über eine oder zwei Messleitungen den Unterdruck an einer Messstelle im Steuerhohlraum einer Melkanlage und/oder in mit dem Steuerhohlraum verbundenen Unterdruckleitungen zu messen. Hierzu wird ein Messschlauch über ein T-Stück mit der Unterdruckleitung verbunden, beispielsweise einem unmittelbaren Unterdruckanschluß eines Zitzenbechers, in dem sich der Steuerhohlraum befindet. Die Unterdruckmessgeräte können einen Unterdruck bis ca. 80 kPa messen. In einer Broschüre des niederländischen Ingenieurs Kees de Koning aus dem Jahr 1991 mit dem Titel "Anleitung für das Messen von Melkanlagen" (Broschüre 19 genannt), wird eine Anwendungsmöglichkeit für die bekannten Unterdruckmessgeräte (Pulsotestgeräte) beschrieben. Durch den Einsatz spezieller Hilfsmittel wird erreicht, dass die Pulsotestgeräte auch zum Messen eines Unterdruckes im Milchflussbereich einer Melkanlage genutzt werden können.

In der Broschüre 19 wird nun zur Messung von Unterdruckschwankungen vorgeschlagen, eine Hohlnadel an einem Ende mit einem ca. 12 cm langen Messschlauch zu verbinden, das andere Ende des Messschlauchs in ein Ausgleichsgefäß zu führen und weiterhin das Ausgleichsgefäß über einen längeren Messschlauch von ca. 40 cm Länge mit dem Meßanschluß des Pulsotestgeräts zu verbinden. Das Ausgleichsgefäß dient dabei als Puffer. Die beiden Messschläuche führen durch die Bohrungen in einem Gummistopfen in das Ausgleichsgefäß, so dass eine durchgehend geschlossene Messanordnung zum Messen eine Unterdruckes gebildet ist. Wird die Hohlnadel in eine Milchflussleitung gestochen, herrscht in der Messanordnung und daher auch am Meßanschluß des Pulsotestgeräts ein Druck, der abhängig von dem Druck an der Messstelle in der Milchflussleitung ist. Dieses Messprinzip soll herangezogen werden können, um verschiedene Arten von Unterdruckschwankungen messen zu können.

Dazu wird in der Broschüre 19 zwischen sogenannten langsamen, zyklischen und unregelmäßigen Unterdruckschwankungen unterschieden. Die langsamen Unterdruckschwankungen sind eine Folge der unterschiedlichen Milchflussmenge, dass heißt, der Melkbarkeit, während des gesamten Melkvorganges. Zum Messen der langsamen Unterdruckschwankungen wird in der Broschüre 19 vorgeschlagen, den Unterdruck an einer Messstelle einer Zitzenmilchleitung, dass heißt, einer Milchleitung, in der Nähe einer Zitzenöffnung etwa eine Minute lang wiederholt zu messen, wobei die Messung am besten ca. 1 bis 1,5 Minuten nach dem Beginn des Melkvorganges gestartet werden soll. Da die Spitze der Hohlnadel, die sich in der Zitzenmilchleitung befindet, während des Melkvorganges von Milch umspült ist, kann es zum Eindringen von Milch in den Kanal der Hohlnadel kommen. Die am anderen Ende des Kanals austretende Milch durchläuft den kurzen Messschlauch und gelangt in das Ausgleichsgefäß. Dadurch, dass sich die Milch in dem Ausgleichgefäß sammelt, wird verhindert, dass die Milch über den langen Messschlauch zum Messeingang des Pulsotestgerätes gelangt.

Die zyklischen Unterdruckschwankungen werden, wie bereits erwähnt, durch die zyklische Betriebsweise der Melkanlage verursacht. Auch die zyklischen Unterdruckschwankungen sind zumindest teilweise durch die Melkbarkeit beeinflusst. Weitere Einflußgrößen bzw. Ursachen für zyklische Unterdruckschwankungen sind unter anderem die Bewegungen des Zitzengummis, die im Bereich der Zitzenöfinung eine Volumenänderung der Milchleitung bewirken, das Grundvolumen des Zitzenbechers, der Durchmesser der Zitzenmilchleitungen und die Art des Pulsatorsystems, mit dem die Bewegung der Zitzengummis gesteuert wird. Je höher die Melkbarkeit ist, um so größer werden die zyklischen Unterdruckschwankungen. Andererseits verhindert ein ungehinderter, schneller Milchabtransport aus dem Bereich der Zitzenöffnungen große zyklische Unterdruckschwankungen im Bereich der jeweiligen Zitzenöffnung. Insbesondere bei alternierenden Pulsatorsystemen kann es bei großen zyklischen Unterdruckschwankungen dazu kommen, dass ein Milchstrom von einer Zitze zu einer anderen Zitze entsteht, so dass es zu dem bereits beschriebenen sogenannten Zitzenwaschen kommt. Ist allerdings der Milchtransport von einem Sammelelement, in dem die einzelnen Zitzenmilchleitungen münden und an dem eine Sammelmilchleitung zum Ableiten der gesammelten Milch angeschlossen ist, ausreichend hoch, kann das Zitzenwaschen wirksam verhindert werden. Eine weitere mögliche Ursache für große zyklische Unterdruckschwankungen sind abgeknickte Milchleitungen. Weiterhin kann das an dem Sammelelement vorhandene Luftloch versperrt sein, so dass das Sammelelement voll läuft und den zügigen Abtransport der Milch verhindert. In diesem Fall sind aber die zyklischen Unterdruckschwankungen sehr klein, da die Beaufschlagung der Zitzenmilchleitungen mit Unterdruck über das Milchleitungssystem erfolgt, welches in diesem Fall blockiert ist. Jedoch ist dieser Zustand gleichermaßen unerwünscht, da es während der Verstopfung nur zu geringem Milchfluß kommt und somit die Dauer des Melkvorganges hoch ist. Weiterhin können sowohl beim Übergang in einer Phase der Verstopfung als auch bei Auflösung der Verstopfung kurzzeitig besonders hohe Unterdruckschwankungen auftreten (die jedoch nicht als zyklische Unterdruckschwankungen bezeichnet werden).

In der Broschüre 19 wird auch folgendes Verfahren zum Messen der zyklischen Unterdruckschwankungen vorgeschlagen: ein Messeingang eines Pulsotestgerätes mit zwei Messeingängen wird mit einer Steuerleitung zum Steuern der Zitzengummis verbunden. Der zweite Messeingang wird wie bei einer Messung der langsamen Unterdruckschwankungen mit einer Zitzenmilchleitung verbunden. Da das Pulsotestgerät nur eine begrenzte Aufnahmekapazität für Messwerte besitzt, soll die Messung der Unterdruckwerte möglichst während der Zeit der höchsten Melkbarkeit vorgenommen werden.

Zur Messung von unregelmäßigen Unterdruckschwankungen, unter denen in der Broschüre 19 alle nicht unter die Begriffe langsame Unterdruckschwankungen oder zyklische Unterdruckschwankungen fallenden Unterdruckschwankungen verstanden werden, wird in der Broschüre 19 ausgeführt: "Die gebräuchlichen Pulsotestgeräte sind hierfür nicht geeignet." (S.12, Z.2) Um sich jedoch einen Überblick über die unregelmäßigen Unterdruckschwankungen in einer Melkanlage zu verschaffen, wird vorgeschlagen, die oben beschriebene Messanordnung an einer Stelle einer Zitzenmilchleitung anzuschließen, d.h. die Hohlnadel dort einzustechen. Die Messung erfolgt jedoch ausschließlich außerhalb der Zeiten, in denen ein Milchfluß durch die Zitzenmilchleitung stattfindet, d.h. außerhalb der Melkzeiten. Es kann somit weder festgestellt werden, welchen Einfluß ein Milchstrom auf die unregelmäßigen Unterdruckschwankungen hat, noch ob die in der "Trockenmessung" festgestellten Unterdruckschwankungen überhaupt bei Milchfluß auftreten.

Schließlich wird in der Broschüre 19 noch vorgeschlagen, bei der Messung der langsamen Unterdruckschwankungen nacheinander Messungen an verschiedenen Messstellen in den Milchleitungen der Melkanlage für jeweils eine kurze Zeit von jeweils etwa 10 Sekunden vorzunehmen. Auf diese Weise soll der größte Widerstand beim Abtransport von Milch ermittelbar sein.

Zusammenfassend geht aus der Broschüre 19 hervor, dass mit dem dort dargestellten Meßsystem eine Messstelle und damit eine dort lokal auftretende Druckschwankung untersucht werden kann.

Aus WO 96/36212 A ist ein Verfahren bekannt, dass zum Messen von Druckschwankungen in einer Melkanlage eingesetzt wird. Über einen Sensor wird ein Unterdruck an einer Messstelle der Melkanlage gemessen. Während desselben kurzen Messzeitraumes werden über zumindest zwei Sensoren Messwerte gemessen, die jeweils den Druck an einem der Sensoren zugeordneten Messstelle im Luftflussbereich der Melkanlage zum gleichen Messzeitraum repräsentieren.

Ausgehend von diesem Stand der Technik ist es nun Aufgabe der vorliegenden Erfindung ein Verfahren und eine Vorrichtung der eingangs genannten An anzugeben, die eine genaue Messung jeglicher Druckschwankungen in einer Melkanlage bei zuverlässigen Messwerten ermöglichen. Insbesondere soll die zuverlässige Messung von kurzzeitigen, unregelmäßigen Unterdruckschwankungen möglich sein.

Die Aufgabe wird durch ein Verfahren mit den Merkmalen des Anspruchs 1 und durch eine Vorrichtung mit den Merkmalen des Anspruches 12 gelöst. Weiterbildungen sind Gegenstand der jeweils abhängigen Ansprüche.

Das erfindungsgemäße Verfahren ist dadurch gekennzeichnet, dass an einer Mehrzahl von Sensoren während desselben kurzen Messzeitraumes Messwerte gemessen werden, die jeweils für den Druck an einer einem der Sensoren zugeordneten Messstelle im Milchaussbereich der Melkanlage repräsentativ sind und miteinander in Korrelation gesetzt werden. Vorteilhafterweise werden von zumindest einem ersten und einem davon getrennt angeordneten zweiten Sensor möglichst im gleichen Zeitpunkt jeweils ein Druck detektiert. Aus diesen Drücken wird eine Druckdifferenz gebildet, insbesondere eine Druckdifferenzschwankung. Auch kann zumindest eine Ableitung und damit auch eine Steigung der Schwankung ermittelt werden. Als Druck wird ein Relativdruck, beispielsweise ein in Abhängigkeit zum Atmosphärendruck gebildeter Unterdruck oder Überdruck, und/oder ein Absolutdruck betrachtet. Vorrichtungsseitig ist eine Mehrzahl der Sensoren vorgesehen, durch die ein für den Druck an jeweils einer Messstelle im Milchflussbereich der Melkanlage repräsentativer Wert ermittelbar ist. Die Vorrichtung ist derart ausgebildet, dass während eines kurzen Messzeitraumes Messwerte der zumindest zwei Sensoren zur Druckermittlung messbar sind. Ein kurzer Messzeitraum bedeutet, dass die beiden Sensoren höchstens innerhalb einer Zeitdifferenz zueinander von 600 Millisekunden abgefragt werden. Um jedoch eine genauere Korrelation zwischen den Druckwerten zu erhalten, sind wesentlich kürzere Abstände angestrebt, beispielsweise von weniger als 10 Millisekunden, vorzugsweise unter 5 Millisekunden und insbesondere unter 1 Millisekunde. Dadurch gelingt es, auch kleinste Druckschwankungen, die nur kurzfristig auftreten, erfassen zu können. Bevorzugt ist daher ein zeitlicher Versatz, der unterhalb von 0,5 Millisekunden liegt, insbesondere gegen Null tendiert bzw. erreicht. Das bedeutet, die Messungen erfolgen zeitgleich, somit zu einem Messzeitpunkt. Damit sind zu einem Messzeitpunkt zwei lokale Druckereignisse im Melkzeug und vorzugsweise in einer Melkleitung miteinander korrelierbar, um daraus einen Rückschluß auf Druckdifferenz, Rückströmung, Fließrichtung und anderen Auswirkungen zu erhalten. Insbesondere lässt sich aus den Messwerten die Passform des Zitzengummis überprüfen. Eine Bewegung des Zitzengummis wie auch ein Aufblähen (Balooning) ist dadurch detektierbar. Ebenfalls wird damit ein Zitzengummikopfvacuum (Unterdruck) feststellbar, welches nicht gewünscht ist.

Die Messung einer Mehrzahl von Unterdruckwerten während desselben Meßzeitraumes hat eine Vielzahl von Vorteilen. Zum einen können beispielsweise zwei unmittelbar nebeneinander gelegene Messstellen vorgesehen werden, um die Funktionsfähigkeit und Zuverlässigkeit der Messung von Unterdruckwerten zu überprüfen. Einflüsse, wie das Verstopfen einer Hohlnadel, über die die Messstelle mit einem Drucksensor verbunden ist, können somit festgestellt werden. Daraufhin kann der Messaufbau, beispielsweise die Ausrichtung der Hohlnadelspitze in der Milchleitung, verbessert werden und es kann erforderlichenfalls die Messvorrichtung, etwa durch Einsetzen einer Hohlnadel mit größerem Innendurchmesser - vorzugsweise zwischen etwa 1,4 und 2,0 Millimeter - optimiert werden. Angestrebt wird, dass das Meßsystem eine möglichst geringe Dämpfung aufweist. Ein weiterer, wesentlicher Vorteil liegt darin, dass ohne Wechsel der Messstelle und durch Messung während desselben Messzeitraumes durch Messen an verschiedenen, entfernt voneinander gelegene Messstellen die Ursache für Unterdruckschwankungen ermittelt werden kann. So wird beispielsweise bei einer Weiterbildung des Verfahrens, bei der die Melkanlage eine Mehrzahl von Zitzenmilchleitungen aufweist, die jeweils die Milch von einer Zitze des zu melkenden Tieres oder der Tiere zu einem Sammelelement leiten, an welches eine Sammelmilchleitung zum Ableiten der gesammelten Milch angeschlossenen ist, zwei der Messstellen in verschiedenen Zitzenmilchleitungen und/oder in zumindest einer Zitzenmilchleitung und der Sammelmilchleitung angeordnet. Auf diese Weise ist es beispielsweise möglich, allein aus dem zeitlichen Verlauf des Unterdrucks an der Mehrzahl der Messstellen auf eine Milchflussumkehr in einer Zitzenmilchleitung oder auf die Überflutung des Sammelelementes zu schließen. Unterdruckschwankungen im System der Melkanlage werden hervorgerufen durch die abfließende Milch, die eine Querschnittsverjüngung erzeugt und den Luftstrom wie eine Drossel verzögert. Vorzugsweise wird, um das Eintreffen solcher "Milchfronten" an einer Messstelle festzustellen, jedoch auch aus anderen Gründen, eine ausreichend häufige Aufnahme von Messwerten an der Messstelle vorgenommen. Dieses bewegt sich in etwa vorzugsweise in einem Bereich von 2 Millisekunden für zehn Sensoren. Insbesondere werden die zu bestimmten Messzeitpunkten an den Drucksensoren vorliegenden Messwerte während des Meßzeitraumes abgefragt oder datentechnisch erfasst und zur sofortigen und/oder späteren Auswertung abgespeichert und/oder angezeigt.

Bei einer Weiterbildung werden die Messwerte einer Mehrzahl der Drucksensoren gleichzeitig oder quasi-gleichzeitig abgefragt bzw. erfasst. Zweckmäßigerweise werden zu wiederkehrenden, insbesondere zueinander äquidistanten Messzeitpunkten, Messwerte desselben Drucksensors oder derselben Drucksensoren abgefragt bzw. erfasst. Insbesondere werden die Messwerte in Zeitabständen von weniger als 5 Millisekunden, bevorzugtermaßen weniger als 3 Millisekunden, abgefragt bzw. erfasst. Weiterhin hat es sich als vorteilhaft erwiesen, wenn eine Messung auf einer Flanke eines Druckanstieges durchgeführt wird, insbesondere so, dass auch ein Druckhöhepunkt ermittelbar ist. Bevorzugt ist, wenn die Messdaten beispielsweise alle 2 Millisekunden gemeinsam zu einem Messzeitpunkt aufgenommen werden. Dabei hat sich eine genaue Auflösung auch von sehr geringen Druckschwankungen gezeigt, die bei etwa 5 kPa Druckdifferenz lagen. Bevorzugt wird auch ein Multiplexer eingesetzt, der beispielsweise mit 18 kHz betrieben wird und die Daten von den Sensoren aufnimmt. Der Multiplexer hat sich besonders bei einer größeren Anzahl von Sensoren bewährt, um diese Gleichzeitigkeit der Messaufnahme so weit wie möglich zu gewährleisten. Ein kürzerer Messzyklus von beispielsweise einer Millisekunde ergibt sich, wenn die Datenaufnahme am Computer und Auswertung entsprechend angepasst ist.

Insbesondere bei mobilen Messvorrichtungen, beispielsweise Laptops, hat es sich für die Messgeschwindigkeit und damit Messgenauigkeit als positiv herausgestellt, ein Datentprotokolliergerät, beispielsweise eine Messkarte oder einen Datenlogger vorzugsweise in Form einer Platine, anstatt wie üblicherweise an eine serielle Anschlussstelle an einen Parallelport des Laptops anzuschließen. Dadurch gelingt es, die beispielsweise über einen Multiplexer ermittelte hohe Datendichte ohne Zeitverzug aufnehmen und weiterverarbeiten zu können. Eine Weiterbildung sieht vor, dass das Datenprotokolliergerät ein Handgerät mit einer Messkarte ist, wobei die Messkarte in Verbindung zu einem Messchip steht, der vorzugsweise am Melkzeug austauschbar angebracht ist. Mittels Verbindung von Messchip und Handgerät, beispielsweise durch Einsetzen des Messchips in das Handgerät, sind die ermittelten Daten weiterverarbeitbar.

Eine Auswertung der aufgenommenen Messdaten wird beispielsweise mittels Kurvendiskussion ausgeführt, wobei eine besonders deutliche Aussage aus den Messwerten durch Differenzbildung der gleichzeitig aufgenommenen Messwerte verschiedener Sensoren und vorzugsweise auch mit der Pulskurve erfolgt. Neben einer möglichen Mittelwertbildung aus den Messdaten, die bevorzugt bei kurzen Messzyklen einsetzbar ist, wird eine besondere Genauigkeit durch Ermittelung eines Phasenmittelwertes erzielt, das bedeutet, wenn ein Zitzengummi sich öffnet und der Druck im Pulsraum abfällt und damit eine Messung auf der Druckabfallflanke (Vakuumanstieg) erfolgt. Die Mittelwerte einzelner Sensoren werden dann in Beziehung zueinander gesetzt.

Alternativ oder zusätzlich zu der Anordnung zumindest von zwei der Messstellen in verschiedenen Zitzenmilchleitungen und/oder in zumindest einer Zitzenmilchleitung und der Sammelleitung werden bei einer Weiterbildung des Verfahrens, bei der die Melkanlage einen Indikator zum Messen und/oder Anzeigen eines Milchstromes und/oder einer Milchmenge aufweist, der in einer Milchleitung angeordnet ist, jeweils zumindest eine der Messstellen in Milchflussrichtung vor und hinter einem Milchflußindikator angeordnet. Der Indikator, beispielsweise ein Milchflussmessgerät, erlaubt eine Ermittlung des Milchvolumenstromes pro Zeiteinheit, beispielsweise zur Bestimmung des Zeitpunktes der Abnahme des Melkbechers von der Zitze. Der Einfluß des Indikators auf die Unterdruckschwankungen ist somit feststellbar. Eine im gleichen Messzeitraum wie bei einer Druckmessung ermittelte Volumen- bzw. Massenstrom ist mit den gewonnen Druckwerten ebenfalls korrelierbar, um beispielsweise Aussagen über das Melkverhalten treffen zu können.

Bei einer weiteren Ausgestaltung des Verfahrens liegt zumindest eine der Messstellen in einem Milchsammelbehälter oder in dessen Einlaufbereich.

Darüber hinaus wird vorgeschlagen, zusätzlich eine Unterdruckmessstelle in einem Pulsraum vorzusehen, wobei die Melkanlage einen in einem Zitzenbecher oder dergleichen angeordneten, außerhalb des Milchflussbereiches liegenden Pulsraum aufweist und wobei der Öffnung- bzw. Schließzustand eines Zitzengummis, abhängig von der Größe eines Unterdruckes in dem Pulsraum ist.

Vorrichtungsseitig wird eine Ausgestaltung bevorzugt, die auch unabhängig von dem Vorhandensein einer Mehrzahl der Drucksensoren zum Messen des Unterdrucks jeweils einer Messstelle im Milchflussbereich der Melkanlage vorgesehen werden kann. Gleichwohl handelt es sich bei dieser Ausgestaltung auch um eine Weiterbildung der bereits genannten Vorrichtung zum Messen von Unterdruckschwankungen. Bei dieser Ausgestaltung bzw. Weiterbildung ist zumindest einer der Drucksensoren mit einem Messhohlraum eines Hohlraumkörpers gekoppelt, wobei der Messhohlraum wiederum mit einer der Messstellen gekoppelt ist, so dass an dem Drucksensor zumindest annähernd der gleiche Druck wie an einer Messstelle herrscht. Der Drucksensor ist beständig gegen etwaige in den Messhohlraum eindringende Milch und auch bei Kontakt mit der Milch funktionsfähig.

Diese Ausgestaltung bietet zahlreiche Vorteile gegenüber dem in der Beschreibungseinleitung beschriebenen Messaufbau mit Ausgleichsgefäß bzw. Milchabscheider. Wie Versuche gezeigt haben, ist es bevorzugt, dass die Verbindung zwischen der eigentlichen Messstelle, deren Druckverhalten gemessen werden soll, und dem Druckaufnehmer möglichst kurz sein soll. Idealerweise geht dieser Abstand gegen Null. Bevorzugt wird eine Nadel eingesetzt, die beispielsweise höchstens drei Zentimeter lang ist. Ein Zentimeter der Länge wird vom Sensor eingenommen, so dass nur ein äußerst geringes Dämpfungsvolumen vorhanden ist. Der Sensor hat vorzugsweise eine Reaktionszeit von etwa 40 µsec oder weniger.

Insbesondere bei Verwendung nicht starrer Verbindungsmittel besteht die Möglichkeit einer Dämpfung des Drucksignals, so dass insbesondere kurzzeitige Unterdruckschwankungen an der Messstelle nur noch gedämpft oder unter Umständen überhaupt nicht mehr von dem Drucksensor gemessen werden können. Ein Ausgleichsgefäß bzw. Milchabscheider erhöht dagegen jedoch das Volumen der Messleitung zwischen Messstelle und Drucksensor erheblich. Weiterhin kann eine Verwendung flexibler Messschläuche und eines Gummistopfens in der eingangs beschriebenen Weise zu einer Dämpfung des Drucksignals führen. Die Verwendung eines Sensors, insbesondere eines Drucksensors, der auch direkt der Milch ausgesetzt werden kann, ist daher eine Weiterbildung zur Steigerung der Messgenauigkeit bzw. zur Erfassung kurzzeitiger Druckschwankungen.

Bei einer konkreten, bevorzugten Ausgestaltung weist der Sensor einen piezoelektrischen Messkörper auf, der mit die piezoelektrische Spannung bzw. das elektrische Feld abgreifende Kontakten verbunden ist, wobei die Kontakte elektrisch gegeneinander isoliert sind.

Bei einer Weiterbildung wird angestrebt, den Sensor möglichst nahe an der Messstelle zu positionieren. Bevorzugt wird ein Drucksensor unmittelbar in der Milchleitung positioniert. Alternativ wird ein Drucksensor außerhalb der Milchleitung angeordnet, wobei der Messhohlraum, der die Verbindung zwischen der Meßstelle und dem Drucksensor darstellt, durch eine unflexible Umhüllung, insbesondere eine Muffe, gebildet ist.

Bei einer Weiterbildung, die aufgrund ihrer einfach und schnell an eine Melkanlage anschließbare Meßtechnik besonders vorteilhaft ist, weist der Hohlraum eine flexible, schlauchförmige Umhüllung, insbesondere aus PVC-Material auf, die gegen Druckschwankungen formbeständig ist. Im Unterschied zu den Siliconschläuchen, die als Messschläuche bei der Ausführung des in der Beschreibungseinleitung genannten Messverfahrens genannt werden, sind PVC-Schläuche resistent gegen die insbesondere kurzzeitige auftretenden Druckschwankungen. Andererseits sind PVC-Schläuche grundsätzlich noch flexibel, so dass mit denselben Schläuchen eine Messverbindung zu verschiedenen Messstellen in den Milchleitungen in einer Melkanlage hergestellt werden können. Bevorzugtermaßen hat die schlauchförmige Umhüllung einer Länge von weniger als 2 cm, insbesondere weniger als 1 cm.

Bei einer Weiterbildung der erfindungsgemäßen Vorrichtung ist der Messhohlraum direkt über einen in einem Anschlusselement ausgebildeten Messkanal mit der Messstelle verbindbar, insbesondere über eine Hohlnadel. Der Messkanal hat einen Durchmesser von größer oder gleich 1,6 mm, insbesondere größer oder gleich 1,8 mm. Auf diese Weise ist, wie Versuche ergeben haben, ein ausreichender Innenquerschnitt des Anschlusselementes vorhanden, so daß gegebenenfalls eindringende Milch nicht oder höchstens kurzzeitig den Messkanalquerschnitt verschließt. Spätestens beim Auftreten von geringen Druckschwankungen wird der Messkanal aufgrund der großen Querschnittsfläche zwischen der Messstelle und dem Drucksensor wieder frei.

Bei einer besonders bevorzugten Weiterbildung werden zumindest zwei der Messstellen derart im Milchflussbereich der Melkanlage angeordnet, dass bei Milchfluß während des Melkvorganges die Messstellen entlang eines Strömungsweges ein- und derselben Milch liegen. Insbesondere liegen die Messstellen in derselben Zitzenmilchleitung und/oder zumindest zwei Messstellen in einer Sammelmilchleitung.

Auf diese Weise können zuverlässig Informationen über die Druckverhältnisse und den zeitlichen Druckverlauf in dem Strömungsweg gesammelt werden. Bevorzugt wird weiterhin, dass aus den an den zumindest zwei Messstellen entlang des Strömungsweges gemessenen Unterdruckwerten der Druckunterschied an den Messstellen ermittelt wird. Es ist somit möglich, aus einem Druckgefälle entgegen der normalen Milchflussrichtung auf eine Milchflussumkehr zu schließen.

Bei noch einer Weiterbildung ist zumindest einer der Drucksensoren über eine Signalleitung zum Übertragen eines dem Meßwerte entsprechenden Messsignals mit einer Einrichtung zum Speichern, zum Auswerten und/oder zum Anzeigen der Messwerte der Drucksensoren verbunden. Dieses schließt auch Datenfernübertragung beispielsweise mittels Infrarotwellen oder anderen Signalübertragungsmöglichkeiten ein, die keine feste Leitung benötigen. Es ist somit möglich, an zentraler, gegen Verschmutzung geschützter Stelle die Einrichtung anzuordnen, und dennoch eine unmittelbare Aufnahme der Messwerte eingehend Messstellen zu ermöglichen. Es ist insbesondere nicht erforderlich, eine Messleitung, in der derselbe Druck wie einer Messstelle herrschen muß, bis zu der Einrichtung zu führen. Die Signalleitung ist vorzugsweise flexibel und zweckmäßigerweise gegen elektromagnetische Felder abgeschirmt, um Störungen der Messung zu vermeiden. Somit besteht auch die Möglichkeit, zum einen ein mobiles wie auch ein ortsfestes Messgerät zu schaffen, wobei die Sensoren über feste Leitungen oder aber beispielsweise über Funkwellen ihre Messsignale weitergeben können.

Als zweckmäßig hat es sich erwiesen, wenn der Sensor direkt an der Messstelle positioniert ist. Dadurch geling es, eine Dämpfung des zu messenden Signale äußerst gering zu halten. Weiterhin ist der Sensor mit Reinigungsmittel reinigbar, beispielsweise mittels Alkohol. Durch den Einsatz der Sensoren im Milchflussbereich und dem dadurch eventuellen Benetzen seiner Oberfläche besteht die Möglichkeit der Bildung von Ablagerungen, beispielsweise durch Sporenbildung, auf seiner Messoberfläche. Dieses könnte zu einer Verfälschung des Messergebnisses führen. Ein Reinigen des Sensors von Zeit verhindert dieses. Der Sensor ist daher vorzugsweise austauschbar in der Vorrichtung angeordnet. Darüber hinaus erlaubt ein Austausch des Sensors auch ein Ersetzen eines eventuell fehlerhaften Sensors oder veralteten Sensors, ohne dass dadurch die gesamte Vorrichtung ausgewechselt werden muß. Die Austauschbarkeit gewährleistet neben der Sicherung der Messgenauigkeit darüber hinaus die Flexibilität der Messung, da sich ein Sensor dadurch am Melkzeug beziehungsweise in der Melkanlage an verschiedenen Messorten einsetzen lässt. Ein besonders bevorzugter Sensor weist weiterhin seinen Operationsverstärker direkt integriert auf, beispielsweise auf seiner Oberfläche. Damit lässt sich die Bauform des Sensors weiter verkleinern, was einerseits eine Störung einer Messung noch weiter verringert, andererseits erlaubt, ein Dämpfungsvolumen durch einen Messkanal nur so klein wie nötig auszulegen. Insbesondere erlaubt ein derartig verkleinerter Sensor aufgrund seiner Abmaße von beispielsweise 20*30*10 Millimeter die Anordnung direkt an der Messstelle ohne zugehöriges Dämpfungsvolumen. Dieses erlaubt es, den Sensor im Raum einer zu messenden Leitung anzuordnen, beispielsweise durch direktes Aufstecken auf eine Nadel. Dadurch lässt sich verhindern, dass der Sensor wie unter Umständen bei Anordnung in einer Leitungswand mit Milch bedeckt wird, was zu Verfälschungen von Messergebnissen führen könnte.

Die Erfindung wird nun anhand von Ausführungsbeispielen näher erläutert. Dabei wird Bezug auf die beigefügte Zeichnung genommen. Die Erfindung ist jedoch nicht auf diese Ausführungsbeispiele beschränkt. Die einzelnen Figuren der Zeichnung zeigen:
- Figur 1: einen schematischen Aufbau einer erfindungsgemäßen Vorrichtung,
- Figur 2: einen möglichen Aufbau eines eingesetzten Sensors, und
- Figur 3: einen Aufbau eines Melkzeuges im Querschnitt mit definierten Punkten zur Anordnung von Sensoren.

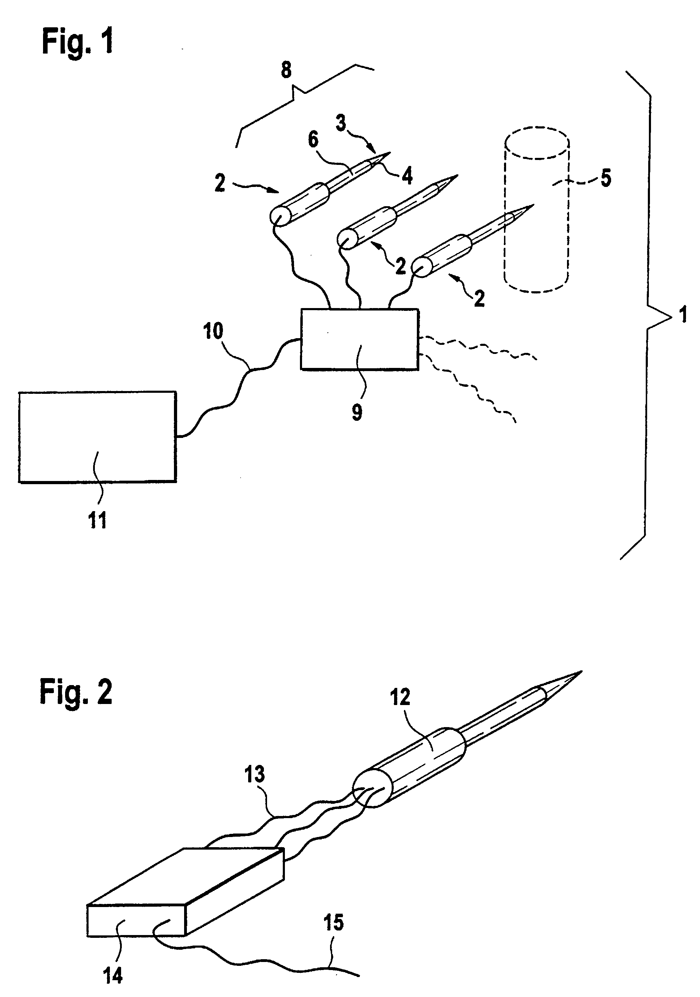

Figur 1 zeigt einen schematischen Aufbau einer Vorrichtung 1 zur Messung von Unterdruck schwankungen. Die Vorrichtung 1 hat mehrere Sensoren 2 zur Aufnahme eines Druckes, wobei drei Sensoren dargestellt sind. Optionale Sensoren 2 sind gestrichelt angedeutet. Ein Sensor 2 verfügt bei dem dargestellten Beispiel über eine Hohlnadel 3, die einen Meßkanal 4 bildet. Die Hohlnadel 3 ist in eine milchführende Leitung bzw. in eine Pulsraumleitung einführbar. Eine derartige Milchleitung 5 ist gestrichelt angedeutet. Über einen kurzen Druckschlauch 6 ist ein druckelektrische Wandler in einem Gehäuse 7 des Sensors 2 mit der Milchleitung 5 verbunden. Die Hohlnadel 3 sowie der Messkanal 4 bilden somit einen Messhohlraum 8. Das Gehäuse 7 ist vorzugsweise eine unflexible Umhüllung, insbesondere eine Muffe. Ein A/D-Wandler 9 ist über eine Gesamtdatenleitung 10 mit einem Speicher- und/oder Auswertemedium als Einrichtung 11 zum Speichern verbunden. Dieses ist vorzugsweise ein PC, Laptop oder Hand-PC. Eine derartige Einrichtung 10 gestattet die Verwendung an mehreren ansonsten ortsfest angebrachten Bauteilen der Vorrichtung 1.

Figur 2 zeigt einen druckelektrischen Wandler 12 in der Ausgestaltung eines piezoelektrischen Meßkörpers. Dieser ist über elektrische Leitungen 13 mit einem Verstärker 14 verbunden. Der druckelektrische Wandler 12 und der Verstärker 14 sind gemeinsam im Gehäuse 7 aus Figur 1 des Sensors 2 untergebracht. Der Verstärker 14 ist durch eine Einzeldatenleitungen 15 an den A/D-Wandler 9 aus Figur 1 angeschlossen. Die Einzeldatenleitung 15 wie auch die Gesamtdatenleitung 10 aus Figur 1 können auch gemäß einer nicht näher dargestellten Ausführungsform leitungslos Daten fernübertragen, beispielsweise mittels Infrarotstrahlung.

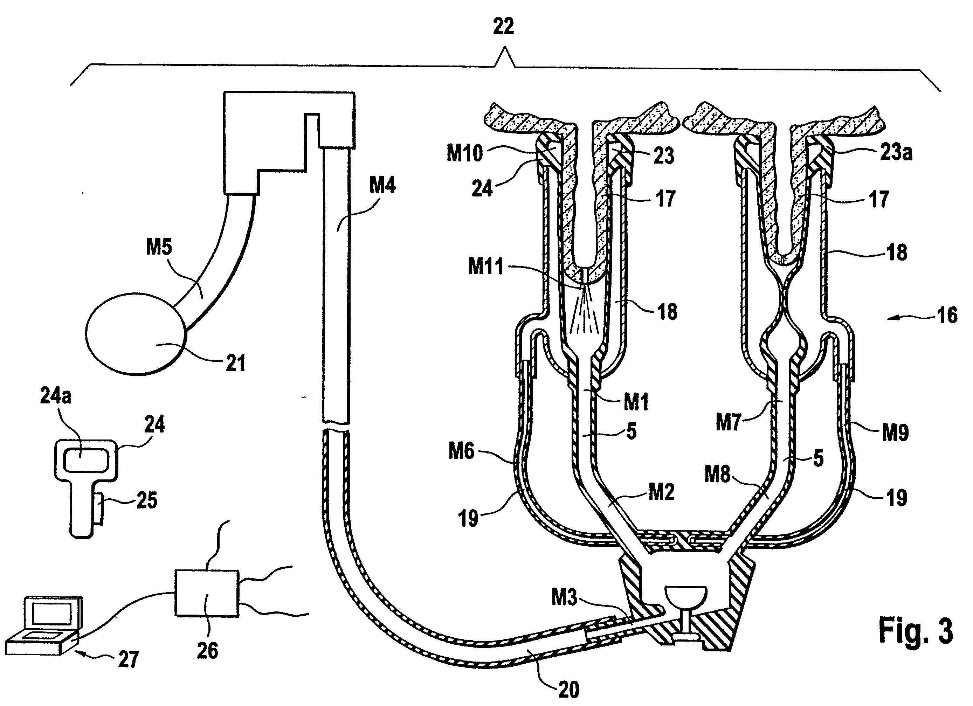

Figur 3 zeigt den schematischen Aufbau eines Melkzeuges 16 im Querschnitt mit definierten Punkten zur Anordnung von nicht näher dargestellten Sensoren. Das Melkzeug 16 hat zwei Milchleitungen 5, für jede dargestellte Zitze 17 jeweils eine Milchleitung 5. Vom jeweiligen Melkbecher 18 geht auch eine Pulsleitung 19 ab. Durch die Zusammenführung der Pulsleitungen 19 und Milchleitungen 5 kann die gemolkene Milch über eine Sammelleitung 20 schließlich zu einem Sammelbehälter 21 der so gebildeten Melkanlage 22 geführt werden. Weiterhin sind verschiedene Messtellen M1 bis M11 eingezeichnet, an denen jeweils ein Sensor positioniert werden kann. Während eine gewünschte Messung eines Druckunterschieds prinzipiell mit zwei Sensoren in einer Leitung möglich ist, werden bevorzugt mindestens 5, vorzugsweise 8 und insbesondere 10 oder mehr Sensoren vorgesehen, um eine hohe Auflösung des Druckund Milchflußverhaltens in der Melkanlage zu erzielen. Eine Besonderheit stellt die Messstelle M11 insofern dar, da es mit ihr gelingt, die aus der Zitze 17 austretende Milch messtechnisch zu erfassen. M11 dort wo größte unterdruck auftrittm1 und m11 besonders aussagekräftig von m1 und m2 auf m11 rückgeschlossen Dazu ist ein nicht näher dargestellter Sensor innerhalb des Melkbechers 18 im für die Zitze gedachten Raum angeordnet. hier absolutdrucksensor Im Bereich des einen Zitzengummikopfraum 23 bildenden Zitzenkopfes 24 befindet sich ebenfalls eine Messstelle M10, über die eine Druckschwankung durch Differenzbildung mit anderen Sensoren ermittelt werden kann. Beispielsweise wird aus den von den Messstellen M1 und M2 erhaltenen Messwerten on-line eine Differenzkurve ermittelt, die Aufschluß gibt über die Fließrichtung der Milch. Festgestellt wurden beispielsweise zwischen der Messstelle M1 und M11 eine Druckdifferenzschwankung von 6 kPa, was zu einem Zitzenwaschen und damit hohem Infektionsrisiko führt. Aus den Druckwerten beider Messstellen lässt sich auch insbesondere auf den Druck an der Messstelle M11 unmittelbar an der Zitzenöffnung rückschließen, ohne direkt dort eine Messung vornehmen zu müssen. Dieses Prinzip ist beispielsweise für eine Kontrolle der Funktion eines Sensors einsetzbar. Eine Weiterbildung sieht vor, dass aus den gemessenen Werten von zumindest zwei Messpunkten über ein gespeichertes Kennfeld beispielsweise auch in Abhängigkeit von Milchfluß, Luftdruck und anderen Parametern auf andere Punkte in den Leitungen des Melkzeuges rückgeschlossen werden kann. Auch gestatten die Messstellen eine Überprüfung der Dichtigkeit des Abschlusses zwischen der Zitze 17 und dem Melkbecher 18, beispielsweise über Auswertung der Messstellen M10, M1, M2 und M 6 und/oder der Auswertung der Messungen der Messstellen M7, M8, M9 und M5, sofern letztere umgesetzt wird. Eine Bewegung des Zitzengummis wie auch ein Aufblähen (Ballooning) ist dadurch detektierbar. Die Anzahl der detektierten Messstellen ist dabei nicht begrenzt.

In Figur 3 ist weiterhin ein Handgerät 24 als Teil einer mobilen Vorrichtung dargestellt. Das Handgerät verfügt über Schnittstellen zum Anschluß von anderen Datenverarbeitungsgeräten, einen Bildschirm 24a zum Anzeigen von Messdaten wie auch ausgewerteten Daten. Das Handgerät 24 weist vorzugsweise einen austauschbaren Messchip 25 auf, mit dem die von den Messstellen M1 bis M11 ermittelten Werte zumindest aufgenommen und bei geeigneter Programmierung weiterverarbeitet werden. Eine Weiterbildung sieht vor, dass der Messchip 25 an einer stationären Vorrichtung verbleibt und mittels des Handgerätes 24 nur noch abgelesen wird. Ebenfalls zeigt Figur 3 ein Datenprotokolliergerät 26, welches die Messwerte der Messstellen M1 bis M11 aufnimmt. Das Datenprotokollgerät 26 ist mit einem Laptop 27 verbunden, der eine weitere Auswertung wie auch Speicherung von Daten, insbesondere auch solchen, die schon miteinander korreliert sind, ermöglicht. Das Datenprotokollgerät 26 ist an den Parallelport des Laptops angeschlossen.

Das Messverfahren wie auch die Vorrichtung sind weiterhin so einsetzbar, dass die gewonnenen Ergebnisse für das stattfindene Melken genutzt werden. Durch Eingriff in eine Melksteuerung ist beispielsweise eine Pulsation beim Melken veränderbar. Die beim Melken vorhandenen unterschiedlichen Melkphasen (A-, B-, C- und D-Phase) können aufgrund der gewonnenen Messwerte beeinflusst, insbesondere verändert werden. Zum Beispiel kann die A-Phase, die die Öffnungsphase der Zitze charakterisiert, verlängert werden von beispielsweise 100 Millisekunden auf 250 Millisekunden. Dieses führt zu einer Verringerung des Volumenstromes, was wiederum einen Abbau von Druckschwankungen zur Folge hat. Dadurch wiederum lässt sich ein Zitzenwaschen vermeiden. Weiterhin besteht auch die Möglichkeit, eine entsprechende Anpassung des Melkvorganges mittels einer Regelung durchzuführen. Eine Weiterbildung sieht vor, dass ein Signal ausgelöst wird, wenn beispielsweise ein vorgegebener Wertebereich nicht eingehalten wird. Dieses kann ein Signal sein, dass ein erneutes Aufsetzen des Melkbechers empfiehlt, oder aber auch ein in eine Regelung oder Steuerung eingreifendes Signal.

### Bezugszeichenliste

- 1: Vorrichtung
- 2: Sensor
- 3: Hohlnadel
- 4: Meßkanal
- 5: Milchleitung
- 6: Druckschlauch
- 7: Gehäuse des Sensors
- 8: Meßhohlraum
- 9: A/D-Wandier
- 10: Gesamtdatenleitung
- 11: Einrichtung zum Speichern
- 12: druckelektrischer Wandler
- 13: elektrische Leitung
- 14: Verstärker
- 15: Einzeldatenleitung
- 16: Melkzeug
- 17: Zitze
- 18: Melkbecher
- 19: Pulsleitung
- 20: Sammelleitung
- 21: Sammelbehälter
- 22: Melkanlage
- 23: Zitzengummikopfraum
- 24: Handgerät
- 24a: Bildschirm
- 25: Messchip
- 26: Datenprotokolliergerät
- 27: Laptop
- M1-M11: Messstellen

## Patentansprüche

1. Verfahren zum Messen von Druckschwankungen in einer Melkanlage (22), insbesondere zum Melken von Kühen, wobei über einen Sensor (2), vorzugsweise ein Drucksensor, der Unterdruck an einer Messtelle (M1-M11) der Melkanlage (22) gemessen wird, und wobei über zumindest zwei Sensoren (2) während desselben kurzen Messzeitraumes Messwerte gemessen werden, die jeweils den Druck an einem der Sensoren (2) zugeordneten Messstelle (M1-M11) im Milchflussbereich und/oder Luftflussbereich der Melkanlage (22) zum gleichen Messzeitraum repräsentieren,
**dadurch gekennzeichnet, dass**
die während desselben kurzen Messzeitraumes gemessenen Messwerte miteinander in Korrelation gesetzt werden.

2. Verfahren nach Anspruch 1, **dadurch gekennzeichnet, dass** zumindest zwei der Messstellen (M1-M11) derart im Milchflussbereich der Melkanlage (22) angeordnet werden, dass bei Milchfluß während des Melkvorganges die Messstellen (M1-M11) entlang eines Strömungsweges für ein- und dasselbe Fluid liegen.

3. Verfahren nach Anspruch 1 oder 2, **dadurch gekennzeichnet, dass** aus den an den zumindest zwei Messstellen (M1-M11) entlang des Strömungsweges gemessenen Messwerten, insbesondere Unterdruckwerten, ein Druckunterschied an den Messstellen ermittelt wird.

4. Verfahren nach Anspruch 1, 2 oder 3, **dadurch gekennzeichnet, dass** aus den Messwerten die Fließrichtung des Milchflusses ermittelt wird.

5. Verfahren nach einem der vorhergehenden Ansprüche, **dadurch gekennzeichnet, dass** im kurzen Messzeitraum der Milchfluß bestimmt und mit den Messwerten der Sensoren (2) im selben Messzeitraum korreliert wird.

6. Verfahren nach einem der vorhergehenden Ansprüche, **dadurch gekennzeichnet, dass** die Messwerte von zumindest zwei Sensoren (2) gleichzeitig oder quasi-gleichzeitig abgefragt bzw. erfasst werden.

7. Verfahren nach einem der vorhergehenden Ansprüche, **dadurch gekennzeichnet, dass** zu wiederkehrenden, insbesondere zueinander äquidistanten Messzeitpunkten Messwerte desselben oder derselben Sensoren (2) abgefragt bzw. erfasst werden.

8. Verfahren nach einem der vorhergehenden Ansprüche, **dadurch gekennzeichnet, dass** die Messwerte in Zeitabständen von weniger als 100 Millisekunden, vorzugsweise weniger als 5 Millisekunden, insbesondere weniger als 2 Millisekunden, abgefragt und erfasst werden.

9. Verfahren nach einem der vorhergehenden Ansprüche für eine Melkanlage (22) mit einem in einem Behälter angeordneten, außerhalb des Milchflussbereichs liegender Pulsleitung (19), **dadurch gekennzeichnet, dass** zumindest über eine erste (M6) und eine zweite Messstelle (M1) eine Druckänderung in dem Zitzengummikopfraum (23) ermittelt wird.

10. Verfahren nach einem der vorhergehenden Ansprüche, **dadurch gekennzeichnet, dass** die zu bestimmten Messzeitpunkten an den Sensoren (2) vorliegenden Messwerte während des Messzeitraumes abgefragt oder datentechnisch erfasst werden und zur sofortigen und/oder späteren Auswertung abgespeichert und/oder angezeigt werden.

11. Verfahren nach einem der vorhergehenden Ansprüche, **dadurch gekennzeichnet, dass** aufgrund des Messwerte und deren Korrelation ein Signal ausgelöst wird.

12. Vorrichtung (1) zum Messen von Druckschwankungen für eine Melkanlage (22), insbesondere zum Melken von Kühen, mit einem ersten Sensor (2) zur Ermittlung eines Drucks an einer Messstelle (M1-M11) der Melkanlage, wobei die Vorrichtung (1) zumindest einen zweiten Sensor (2) zur Ermittlung eines Druckes aufweist, und wobei während eines kurzen Messzeitraumes Messwerte der Sensoren (2) aufgenommen werden,
**dadurch gekennzeichnet, dass**
die Vorrichtung (1) derart ausgebildet ist, dass die während eines kurzen Messzeitraumes aufgenommenen Messwerte in Korrelation zueinander zur Ermittlung eines im Messzeitraum herrschenden Druckunterschiedes aus den Messwerten von beiden Sensoren (2) gebracht werden.

13. Vorrichtung (1) nach Anspruch 12, **dadurch gekennzeichnet, dass** zumindest einer der Sensoren (2) mit einem Messhohlraum (8) gekoppelt ist, wobei der Messhohlraum (8) wiederum mit einer der Messstellen (M1-M11) koppelbar ist, so dass an dem Sensor (2) zumindest annähernd der gleiche Druck wie an der Messstelle (M1-M11) herrscht, und dass der Sensor (2) beständig gegen etwaig in den Messhohlraum (8) eindringende Milch ist und auch bei Kontakt mit der Milch funktionsfähig ist, wobei die Messstelle (M1 -M11) vorzugsweise vollständig luftumgeben ist.

14. Vorrichtung (1) nach Anspruch 12 oder 13, **dadurch gekennzeichnet, dass** der Messhohlraum (8) durch eine unflexible Umhüllung, insbesondere durch eine Muffe, gebildet ist oder eine flexible schlauchförmige Umhüllung, insbesondere aus PVC-Material, aufweist, die gegen Druckschwankungen formbeständig ist.

15. Vorrichtung nach Anspruch 14, **dadurch gekennzeichnet, dass** die Umhüllung eine Länge von weniger als 2 cm hat, insbesondere von weniger als 1 cm.

16. Vorrichtung (1) nach einem der Ansprüche 12 bis 15, **dadurch gekennzeichnet, dass** der Messhohlraum (8) direkt über einen in einem Anschlusselement ausgebildeten Messkanal (4) mit einer Messstelle (M1-M11) verbunden ist und dass der Messkanal (4) vorzugsweise einen Durchmesser von mindestens 1,4 mm, insbesondere von etwa 2 mm hat.

17. Vorrichtung (1) nach einem der Ansprüche 12 bis 16, **dadurch gekennzeichnet, dass** ein Sensor (2) einen Operationsverstärker direkt auf dem Sensor (2) angeordnet aufweist.

18. Vorrichtung (1) nach einem der vorhergehenden Ansprüche, **dadurch gekennzeichnet, dass** die Vorrichtung (1) ein Messgerät zur Bestimmung eines Milchvolumenstromes hat.

19. Vorrichtung (1) nach einem der vorhergehenden Ansprüche, **dadurch gekennzeichnet, dass** diese eine Einrichtung (11) zum Speichern, zum Auswerten und/oder zum Anzeigen von Messwerten der Sensoren (2) hat, wobei zumindest einer der Sensoren (2) über einen Signalweg mit der Einrichtung verbunden ist.

20. Melkanlage (22) mit einer Vorrichtung (1) nach Anspruch 12, **dadurch gekennzeichnet, dass** die Melkanlage einen Indikator zum Messen und/oder Anzeigen eines Milchstromes und/oder einer Milchmenge aufweist, der in einer Milchleitung (5) angeordnet ist, wobei jeweils zumindest eine der Messstellen (M1 - M11) in Milchflussrichtung vor und hinter dem Indikator liegt.

21. Melkanlage (22) mit einer Vorrichtung (1) nach Anspruch 12, **dadurch gekennzeichnet, dass** die Melkanlage (22), insbesondere ein Melkzeug (16), Bauteile der Vorrichtung (1) zumindest teilweise integriert aufweist.

22. Vorrichtung (1) nach einem der vorhergehenden Ansprüche, **dadurch gekennzeichnet, dass** die Vorrichtung (1) mobil und/oder stationär ist.

23. Vorrichtung (1) nach einem der vorhergehenden Ansprüche, **dadurch gekennzeichnet, dass** diese einen austauschbaren Messchip zur Meßdatenaufnahme hat.

24. Vorrichtung (1) nach einem der vorhergehenden Ansprüche, **dadurch gekennzeichnet, dass** diese ein Datenprotokolliergerät zur Aufnahme von Messdaten von Druckschwankungen in der Melkanlage (22) aufweist, wobei das Datenprotokolliergerät an einen Parallelport der Vorrichtung zur Datenübertragung angeschlossen ist.

25. Vorrichtung nach Anspruch 12, **dadurch gekennzeichnet, dass** der Sensor (2) austauschbar in der Vorrichtung (1) angeordnet ist.

## Claims

1. Method for measuring pressure variations in a milking machine (22) especially for milking cows, whereby by means of a sensor (2), preferably a pressure sensor, the vacuum at one measuring point (M1-M11) of said milking machine (22) is measured, and whereby by means of at least two sensors (2) during the same short measuring period values are measured each representing the pressure at one of said measuring points (M1-M11), which are assigned to said sensors (2), in the milk flow area and/or air flow area of said milking machine (22) during the same measuring period,
**characterized in that**
said values measured during the same short measuring period are correlated with one another.

2. Method according to claim 1, **characterized in that** at least two of said measuring points (M1-M11) are arranged in said milk flow area of said milking machine (22) in a way that in the case of milk flow during milking said measuring points (M1-M11) are positioned along one flow path for one and the same fluid.

3. Method according to claim 1 or 2, **characterized in that** based on said values, in particular vacuum values, measured at at least two of said measuring points (M1-M11) along said flow path a pressure difference is determined at said measuring points.

4. Method according to claim 1, 2 or 3, **characterized in that** based on said measured values the flow direction of said milk flow is determined.

5. Method according to any of the preceding claims, **characterized in that** in said short measuring period said milk flow is determined and correlated with said values measured by said sensors (2) in the same measuring period.

6. Method according to any of the preceding claims, **characterized in that** said measured values are sensed respectively collected by at least two of said sensors (2) at the same time or at the quasi-same time.

7. Method according to any of the preceding claims, **characterized in that** at recurring, in particular measuring times equidistant in relation to one another, said measured values are sensed respectively collected by the same sensor or sensors (2).

8. Method according to any of the preceding claims, **characterized in that** said measured values are sensed and collected at time intervals of less than 100 milliseconds, preferably less than 5 milliseconds, in particular less than 2 milliseconds.

9. Method according to any of the preceding claims for a milking machine (22) comprising a pulse line (19), which is outside of said milk flow area and arranged in a receptacle, **characterized in that** at least by means of a first (M6) and a second (M1) measuring point a change in the pressure in the head space (23) of the teat cup lining is established.

10. Method according to any of the preceding claims, **characterized in that** said measured values present at fixed measuring times at said sensors (2) are sensed or collected during said measuring period by means of data systems technology and are stored and/or displayed for immediate and/or later evaluation.

11. Method according to any of the preceding claims, **characterized in that** based on said measured values and their correlation a signal is triggered.

12. Device (1) for measuring pressure variations for a milking machine (22), especially for milking cows, comprising a first sensor (2) for establishing a pressure at a measuring point (M1-M11) of said milking machine, whereby said device (1) comprises at least a second sensor (2) for establishing a pressure and whereby during a short measuring period values measured by said sensors (2) are recorded,
**characterized in that**
said device (1) is designed in such a way that said measured values recorded during a short measuring period are correlated with one another in order to determine, based on the measured values of both sensors (2), a difference of pressure present during said measuring period.

13. Device (1) according to claim 12, **characterized in that** at least one of said sensors (2) is coupled with a measuring hollow (8), whereby said measuring hollow (8) itself is able to be coupled with one of said measuring points (M1-M11), so that at said sensor (2) at least approximately the same pressure is present as at said measuring point (M1-M11), and that said sensor (2) is constantly resistant to milk, which might seep into said measuring hollow (8), and is able to function also when in contact with milk, whereby said measuring point (M1-M11) is preferably completely surrounded by air.

14. Device (1) according to claim 12 or 13, **characterized in that** said measuring hollow (8) is formed by means of an inflexible casing, in particular by means of a sleeve, or a flexible tubular casing, in particular of PVC material, which keeps its shape under pressure variations.

15. Device according to claim 14, **characterized in that** said casing has a length of less than 2 cm, in particular less than 1 cm.

16. Device (1) according to any of the claims 12 to 15, **characterized in that** said measuring hollow (8) via a measuring duct (4), contained in a connection element, is directly connected to a measuring point (M1-M11) and that said measuring duct (4) has a diameter of preferably at least 1.4 mm, in particular of about 2 mm.

17. Device (1) according to any of the claims 12 to 16, **characterized in that** a sensor (2) comprises an operational amplifier arranged directly on said sensor (2).

18. Device (1) according to any of the preceding claims, **characterized in that** said device (1) comprises a measuring instrument for determination of a milk volume flow.

19. Device (1) according to any of the preceding claims,
**characterized in that** it comprises equipment (11) for storing, evaluating and/or displaying values measured by said sensors (2), whereby at least one of said sensors (2) is connected to said equipment via a signal path.

20. Milking machine (22) comprising a device (1) according to claim 12, **characterized in that** said milking machine comprises an indicator arranged in a milk line (5) for measuring and/or displaying a milk flow and/or an amount of milk, whereby in the direction of the milk flow each in front of and behind said indicator at least one of said measuring points (M1-M11) is positioned.

21. Milking machine (22) comprising a device (1) according to claim 12, **characterized in that** said milking machine (22), in particular a teat cup cluster (16), comprises at least partly integrated constructional parts of said device (1).

22. Device (1) according to any of the preceding claims,
**characterized in that** said device (1) is mobile and/or stationary.

23. Device (1) according to any of the preceding claims, **characterized in that** it contains an exchangeable measuring chip for reception of measured data.

24. Device (1) according to any of the preceding claims, **characterized in that** it comprises a data recording device for recording measured data on pressure variations in said milking machine (22), whereby said data recording device is connected to a parallel port of said device for data transmission.

25. Device according to claim 12, **characterized in that** said sensor (2) is replaceably arranged in said device (1).

## Revendications

1. Procédé de mesure des variations d'un vide dans une installation à traire (22), en particulier pour la traite de vaches, dans lequel le vide est mesuré en un point de mesure (M1 à M11) de l'installation à traire (22) à l'aide d'un capteur (2), de préférence à l'aide d'un capteur de pression, et dans lequel des valeurs de mesure sont relevées pendant le même court intervalle de temps de mesure à l'aide d'au moins deux capteurs (2), ces valeurs de mesure représentant respectivement le vide appliqué en un point de mesure (M1 à M11) affecté aux capteurs (2) dans la zone de débit de lait et/ou dans la zone de débit d'air du système à traire (22) dans le même intervalle de temps de mesure,
**caractérisé en ce que**
les valeurs de mesure relevées pendant le même court intervalle de temps de mesure sont mises en corrélation les unes avec les autres.

2. Procédé selon la revendication 1, **caractérisé en ce qu'**au moins deux des points de mesure (M1 à M11) sont placés dans la zone de débit de lait du système à traire (22) de telle sorte qu'en cas de débit de lait au cours du processus de traite, les points de mesure (M1 à M11) sont placés le long d'une voie de circulation pour un seul et même fluide.

3. Procédé selon la revendication 1 ou 2, **caractérisé en ce qu'**à partir des valeurs de mesure relevées au moins sur deux points de mesure (M1 à M11) le long de la voie de circulation, en particulier à partir des valeurs de vide, une différence de vide est déterminée sur les points de mesure.

4. Procédé selon la revendication 1, 2 ou 3, **caractérisé en ce qu'**à partir des valeurs de mesure, le sens d'écoulement du débit de lait est déterminé.

5. Procédé selon l'une quelconque des revendications précédentes, **caractérisé en ce que**, dans un intervalle de temps de mesure court, le débit de lait est déterminé et est mis en corrélation avec les valeurs de mesure des capteurs (2) dans le même intervalle de temps de mesure.

6. Procédé selon l'une quelconque des revendications précédentes, **caractérisé en ce que** les valeurs de mesure sont scrutées ou saisies simultanément ou presque simultanément par au moins deux capteurs (2).

7. Procédé selon l'une quelconque des revendications précédentes, **caractérisé en ce que** les valeurs de mesure du même ou des mêmes capteur(s) (2) sont scrutées ou saisies à des instants de mesure récurrents, en particulier à intervalles réguliers.

8. Procédé selon l'une quelconque des revendications précédentes, **caractérisé en ce que** les valeurs de mesure sont scrutées ou saisies à des intervalles de temps de moins de 100 millisecondes, de préférence de moins de 5 millisecondes, en particulier de moins de 2 millisecondes.

9. Procédé selon l'une quelconque des revendications précédentes pour une installation à traire (22) équipée d'une conduite d'impulsion (19) placée dans un récipient, en dehors de la zone de débit de lait, **caractérisé en ce qu'**une variation de vide est déterminée dans l'espace vide de la tête en caoutchouc pour trayon (23) au moins via un premier point de mesure (M6) et un deuxième point de mesure (M1).

10. Procédé selon l'une quelconque des revendications précédentes, **caractérisé en ce que** les valeurs de mesure existantes sur les capteurs (2) à des instants de mesure précis sont scrutées ou saisies selon une technique de données dans l'intervalle de temps de mesure et sont stockées et/ou affichées pour une évaluation immédiate et/ou ultérieure.

11. Procédé selon l'une quelconque des revendications précédentes, **caractérisé en ce que**, en raison des valeurs de mesure et de leur mise en corrélation, un signal est supprimé.

12. Dispositif (1) de mesure des variations d'un vide pour une installation à traire (22), en particulier pour la traite de vaches, comportant un premier capteur (2) pour déterminer une pression en un point de mesure (M1 à M11) du système à traire, le dispositif (1) présentant au moins un deuxième capteur (2) afin de déterminer une pression, les valeurs de mesure des capteurs (2) étant enregistrées pendant un court intervalle de temps de mesure,
**caractérisé en ce que**
le dispositif (1) est mis en oeuvre de telle sorte que les valeurs de mesure enregistrées pendant un court intervalle de temps de mesure sont mises en corrélation les unes avec les autres afin de déterminer une pression différentielle régnant dans l'intervalle de temps de mesure, à partir des valeurs de mesure des deux capteurs (2).

13. Dispositif (1) selon la revendication 12, **caractérisé en ce qu'**au moins un des capteurs (2) peut être couplé à une cavité de mesure (8), cette cavité de mesure (8) pouvant être à son tour couplée à l'un des points de mesure (M1 à M11), de sorte qu'il règne au moins à peu près la même pression au niveau du capteur (2) qu'au niveau du point de mesure (M1 à M11), et de sorte que le capteur (2) est résistant au lait entrant éventuellement dans la cavité de mesure (8), et qu'il est également opérationnel lorsqu'il est en contact avec du lait, le point de mesure (M1 à M11) étant de préférence entièrement entouré d'air.

14. Dispositif (1) selon la revendication 12 ou 13, **caractérisé en ce que** la cavité de mesure (8) est formée d'une enveloppe non flexible, en particulier d'un manchon, ou présente une enveloppe flexible en forme de tuyau, en particulier en PVC, qui ne se déforme pas lors des variations de pression.

15. Dispositif selon la revendication 14, **caractérisé en ce que** l'enveloppe présente une longueur de moins de 2 cm, en particulier de moins de 1 cm.

16. Dispositif (1) selon l'une des revendications 12 à 15, **caractérisé en ce que** la cavité de mesure (8) est directement reliée à un point de mesure (M1 à M11) via un canal de mesure (4) formé dans un élément de raccordement, et **en ce que** le canal de mesure (4) présente de préférence un diamètre d'au moins 1,4 mm, en particulier d'environ 2 mm.

17. Dispositif (1) selon l'une des revendications 12 à 16, **caractérisé en ce qu'**un capteur (2) présente un amplificateur opérationnel placé directement sur le capteur (2).

18. Dispositif (1) selon l'une quelconque des revendications précédentes, **caractérisé en ce que** le dispositif (1) comporte un appareil de mesure permettant de déterminer un débit volumétrique de lait.

19. Dispositif (1) selon l'une quelconque des revendications précédentes, **caractérisé en ce que** ce dispositif comporte un appareil (11) permettant de stocker, évaluer et/ou afficher les valeurs de mesure des capteurs (2), au moins un des capteurs (2) étant relié au dispositif via une voie de signal.

20. Installation à traire (22) équipé d'un dispositif (1) selon la revendication 12, **caractérisé en ce que** l'installation à traire présente un indicateur permettant de mesurer et/ou d'afficher un débit de lait et/ou une quantité de lait, placé dans une conduite de lait (5), au moins un des points de mesure (M1 à M11) se trouvant respectivement avant et après l'indicateur dans la direction du débit de lait.

21. Installation à traire (22) équipé d'un dispositif (1) selon la revendication 12, **caractérisé en ce que** l'installation à traire (22), en particulier un faisceau trayeur (16), présente des composants du dispositif (1) au moins partiellement intégrés.

22. Dispositif (1) selon l'une quelconque des revendications précédentes, **caractérisé en ce que** le dispositif (1) est mobile et/ou stationnaire.

23. Dispositif (1) selon l'une quelconque des revendications précédentes, **caractérisé en ce que** ce dispositif possède une puce de mesure interchangeable permettant de prélever les données de mesure.

24. Dispositif (1) selon l'une quelconque des revendications précédentes, **caractérisé en ce que** ce dispositif comporte un appareil de protocole de données permettant d'enregistrer les données de mesure des variations de pression dans l'installation à traire (22), l'appareil de protocole de données étant relié à un port parallèle du dispositif pour la transmission des données.

25. Dispositif selon la revendication 12, **caractérisé en ce que** le capteur (2) est placé de manière interchangeable dans le dispositif (1).
